# EUROPÄISCHE PATENTSCHRIFT

(11) **EP 3 292 705 B1**
(45) Veröffentlichungstag und Bekanntmachung des Hinweises auf die Patenterteilung: **01.07.2020**
(21) Anmeldenummer: 16720405.6
(22) Anmeldetag: 02.05.2016
(51) Int. Cl.: H04W 4/48, H04W 4/02, H04W 48/18

(54) **VERBINDUNG VON STEUERGERÄTEN UND DER V2X EINHEIT ÜBER WLAN ODER BLUETOOTH, V2X EINHEIT MIT UPDATE SPEICHER**
CONNECTING CONTROL DEVICES AND THE V2X UNIT VIA WLAN OR BLUETOOTH, AND V2X UNIT WHICH HAS UPDATE MEMORY
LIAISON D'APPAREILS DE COMMANDE ET DE L'UNITÉ V2X PAR WLAN OU BLUETOOTH, UNITÉ V2X AVEC MÉMOIRE DE MISE À JOUR

(30) Priorität: 05.05.2015 DE 102015208269
(43) Veröffentlichungstag der Anmeldung: 14.03.2018
(73) Patentinhaber: Continental Teves AG & Co. OHG, 60488 Frankfurt am Main (DE)
(72) Erfinder: STÄHLIN, Ulrich, 65760 Eschborn (DE); MENZEL, Marc, 35096 Weimar (Lahn) (DE)
(86) Internationale Anmeldenummer: PCT/EP2016/059735
(87) Internationale Veröffentlichungsnummer: WO 2016/177661

(56) Entgegenhaltungen:
- DE-A1-102008 037 880
- DE-A1-102010 029 465
- US-A1- 2015 032 291
- ABD-ELRAHMAN EMAD ET AL: "A hybrid model to extend vehicular intercommunication V2V through D2D architecture", 2015 INTERNATIONAL CONFERENCE ON COMPUTING, NETWORKING AND COMMUNICATIONS (ICNC), IEEE, 16. Februar 2015 (2015-02-16), Seiten 754-759, XP032752678, DOI: 10.1109/ICCNC.2015.7069441 [gefunden am 2015-03-26]

## Beschreibung

Die Erfindung betrifft ein Fahrzeugsystem zum Übermitteln von Daten von einer V2X Einheit zu einem Steuergerät über ein drahtloses Kommunikationsmodul, ein Verfahren zum Betreiben eines solchen Fahrzeugsystems sowie ein Verfahren zum Speichern von Daten in einem Fahrzeugsystem.

Aus der EP 2 186 379 B1 ist eine Vorrichtung zum Übertragen von Informationen in einer auf WLAN IEEE802.11-Standard basierenden Fahrzeug-zu-Fahrzeug-Kommunikation bekannt, bei der sowohl Sicherheitsinformationen nach dem IEEE802.11p-Standard als auch nicht sicherheitsrelevante Informationen nach einem anderen IEEE802.11-Standard übertragen werden. Die Vorrichtung weist hierzu einen WLAN-Chipsatz auf, der mittels eines Steuerbefehls zwischen einem ersten Modus nach dem IEEE802.11p-Standard und einem zweiten Modus nach einem anderen IEEE802.11-Standard umschaltbar ist. Die Vorrichtung weist ferner eine Steuereinrichtung auf, welche den Modus des WLAN-Chipsatzes mittels Steuerbefehl umschaltet, wobei die Steuereinheit mit einer Schnittstelle zu einem als Fahrerassistenzsystem ausgebildeten Fahrzeugsteuersystem ausgestattet ist, und wobei die Steuereinheit den Fahrzeugzustand ermittelt und die Umschaltung des Modus des WLAN Chipsatzes abhängig von dem Fahrzeugzustand durchführt.

Das Dokument DE 10 2008 037 880 A1 offenbart eine Vorrichtung und ein Verfahren zum Übertragen von Informationen in einer auf WLAN 30 basierenden Fahrzeug-zu-Fahrzeug-Kommunikation, wobei ein WLAN-Chipsatz mittels eines Steuerbefehls zwischen einem ersten Modus nach dem IEEE802.11p-Standard und einem zweiten Modus nach einem anderen IEEE802.11-Standard umschaltbar ist.

Das Dokument US 2015/032291 A1 offenbart ein Telematikverfahren und ein zugehöriges System zum Empfangen und Senden von Daten, wobei eine Kurzstreckenverbindung mit Zugriffsgeräten vorgesehen ist.

Es ist ferner bekannt, dass V2X Kommunikationschips auf Basis des 802.11p Standards verwendet werden, die im 5GHz-Band senden und empfangen können. Für V2X wird nur ein bestimmter Bereich davon genutzt. Es ist jedoch typischerweise technisch möglich, auch andere WLAN-Versionen im 5GHz-Band mit demselben Transceiver zu realisieren, teilweise evtl. mit eingeschränkten Breiten der verwendeten Bänder (10MHz vs. 40 - 80 MHz). Vor allem in Situationen, in denen keine V2X Kommunikation notwendig ist, beispielsweise bei geparktem Fahrzeug, oder in denen ein zeitlicher Mischbetrieb möglich ist, beispielsweise bei sehr langsamer Stadtfahrt oder in der Wartesituation vor einer Ampel, bietet es sich an, diese Synergie auch zu verwenden, beispielsweise um in dieser Zeit Infotainment Daten per WLAN ins Fahrzeug zu laden.

Die Bandbreitenanforderungen für V2X und WLAN sind jedoch sehr unterschiedlich. V2X kommt mit 6MBit aus, wohingegen mittels WLAN bereits in alten Versionen 54MBit übertragbar sind. Das führt dazu, dass bei der weiteren Verteilung der Daten im Fahrzeug unterschiedliche Anforderungen an den internen Fahrzeugbus gestellt werden. Für V2X reicht CAN-FD bzw. CAN aus - vor allem, wenn zusätzlich noch eine Vorverarbeitung stattfindet oder evtl. sogar die Endkundenanwendungen direkt in der ECU gerechnet werden, die auch den Transceiver beinhaltet - wohingegen WLAN einen High-Speed-Bus wie beispielsweise Ethernet benötigt. Diese High-Speed-Bussysteme sind jedoch teuer, vor allem wenn für eine Sternverkabelung noch Switches oder Router benötigt werden Davon ausgehend ist es Aufgabe der Erfindung ein Fahrzeugsystem oder ein Verfahren aufzuzeigen, womit eine kostengünstige und einfache Lösung zum Austausch von Daten zwischen der V2X Einheit und einem Steuergerät des Fahrzeugs realisierbar ist.

Die Aufgabe wird nach einem ersten Aspekt der Erfindung gelöst mittels eines Fahrzeugsystems gemäß Anspruch 1. Vorteilhafte Ausführungsformen sind Gegenstand der Unteransprüche, die durch Bezugnahme hiermit ausdrücklich zum Gegenstand der Beschreibung gemacht werden.

Erfindungsgemäß wird ein Fahrzeugsystem vorgeschlagen, das
eine V2X Einheit zum Betreiben einer Fahrzeug-zu-X Kommunikation, aufweisend ein Kommunikationsmodul zur drahtlosen Datenübertragung, und
ein Steuergerät zum Ausführen einer Benutzeranwendung, aufweisend ein Kommunikationsmodul zur drahtlosen Datenübertragung, das mit dem Kommunikationsmodul der V2X Einheit koppelbar ist, umfasst,
wobei die V2X Einheit und das Steuergerät in einen Datenübertragungsmodus aktivierbar sind, um die Kommunikationsmodule zur drahtlosen Datenübertragung der V2X Einheit und des Steuergerätes für einen Datenaustausch miteinander zu koppeln.

Der Erfindung liegt der Gedanke zugrunde den Austausch von nicht V2X relevanten Daten über eine direkte drahtlose Verbindung zwischen der V2X Einheit und dem jeweiligen Steuergerät, bspw. eine Infotainment-ECU, auszuführen. Auf diese Weise erübrigt sich die Notwendigkeit eine separate Ethernet Schnittstelle zur Datenübertragung an die jeweiligen Steuergeräte vorsehen zu müssen oder eventuell die üblichen Schnittstellen, wie CAN oder CAN FD, zur Übertragung von Daten gesondert anpassen zu müssen, um die benötigten Datenübertragungsraten bereitstellen zu können. Diese Schnittstellen werden für die Übertragung von V2X Daten weiterhin vorgehalten, werden jedoch nicht zur Übertragung von nicht V2X spezifischen Daten benötigt. Das drahtlose Kommunikationsmodul der V2X Einheit ist vorzugsweise dafür vorgesehen, dass es sowohl eine drahtlose Verbindung zu einem externen Netzwerk, aber insbesondere eine drahtlose Verbindung mit ausreichender Geschwindigkeit zu den Steuergeräten aufbauen kann. Die Verbindung zu einem externen Netzwerk kann beispielsweise über WLAN oder auch über Mobilfunkverbindungen gemäß dem 3G oder LTE Standard aufgebaut werden, um nur einige Beispiele zu nennen.

Im weitesten Sinne ist unter einem Steuergerät ein Gerät zu verstehen, was im Fahrbetrieb Nutzerdaten benötigt. Im engeren Sinne handelt es sich um Steuergeräte, Kontrolleinheiten oder ECUs, die im Fahrzeug verbaut sind und Fahr- oder Fahrzeugfunktionen übernehmen. Im weiteren Sinne sind hiervon auch solche Geräte umfasst, die nicht unmittelbar im Fahrzeug eingebaut sind, wie z. B. Smartphones, aber mit dem Fahrzeug interagieren können.

Erfindungsgemäß ist vorgesehen, dass die V2X Einheit und das Steuergerät mittels einer Schnittstelle, insbesondere CAN oder CAN FD, gekoppelt sind, wobei der Datenübertragungsmodus mittels eines Aktivierungssignals der V2X Einheit über die Schnittstelle aktivierbar ist. Sobald das Aktivierungssignal gesendet wurde, wird eine Kopplung der drahtlosen Kommunikationsmodule vorgenommen, um eine Verbindung zwischen der V2X Einheit und dem Steuergerät aufzubauen. Die Schnittstellen, die für V2X Anwendungen vorgehalten werden, eignen sich besonders gut zur Übertragung des Aktivierungssignals.

Eine vorteilhafte Ausführungsform des erfindungsgemäßen Fahrzeugsystems zeichnet sich dadurch aus, dass der Datenübertragungsmodus in Abhängigkeit vom Zustand der Klemme 15 aktivierbar ist. Der Zustand der Klemme 15 ist eine sehr einfache und sichere Möglichkeit den Zustand der Zündung des Fahrzeugs festzustellen, weshalb es sich besonders gut als Trigger für die Aktivierung des Datenübertragungsmodus eignet. Im offenen bzw. abgeschalteten Zustand der Klemme 15, d. h. Zündung ausgeschaltet, kann dann der Datenübertragungsmodus aktiviert werden. Entsprechend kann in einem geschlossenen oder zugeschalteten Zustand der Klemme 15 der Datenübertragungsmodus wieder deaktiviert werden.

Eine vorteilhafte Ausführungsform des erfindungsgemäßen Fahrzeugsystems zeichnet sich dadurch aus, dass im abgeschalteten Zustand der Klemme 15 Daten zur V2X Kommunikation über das Steuergerät mittels der Kommunikationsmodule übertragbar sind. Mit dieser Ausführungsform ist es in vorteilhafter Weise möglich auf einen Anschluss der V2X Einheit an einen Datenbus eines Fahrzeugs und entsprechend auf eine gesonderte Datenbus oder CAN Schnittstelle zu verzichten, was die V2X Einheit als Nachrüstoption interessanter macht. Diese Ausführungsform definiert zwei Zustände, die eine V2X Einheit annehmen kann, nämlich einen V2X Modus wenn die Klemme 15 zugeschaltet ist und einen Datenübertragungsmodus wenn die Klemme 15 abgeschaltet ist. Die Übertragung von Daten, sei es V2X oder sonstige Daten, erfolgt für diese Ausführungsform in beiden Fällen über das drahtlose Kommunikationsmodul, wobei die für V2X nötigen Datenbus bzw. CAN Daten mittels der Kommunikationsmodule zur drahtlosen Datenübertragung von dem Steuergerät bereitgestellt werden, dass an den Datenbus bzw. CAN Bus angebunden ist.

Eine vorteilhafte Ausführungsform des erfindungsgemäßen Fahrzeugsystems zeichnet sich dadurch aus, dass das Kommunikationsmodul der V2X Einheit zum gleichzeitigen Betreiben der V2X Kommunikation und der Kopplung mit einem Steuergerät ausgebildet ist. Auf diese Weise ist eine besonders flexible Steuerung des Datenübertragungsmodus möglich. Bevorzugt ist das Steuergerät ein fahrzeuginternes Steuergerät bzw. innerhalb des Fahrzeugs.

Eine vorteilhafte Ausführungsform des erfindungsgemäßen Fahrzeugsystems zeichnet sich dadurch aus, dass die V2X Einheit mehrere Kommunikationskanäle zum gleichzeitigen Senden und Empfangen von Daten aufweist.

Eine vorteilhafte Ausführungsform des erfindungsgemäßen Fahrzeugsystems zeichnet sich dadurch aus, dass das Kommunikationsmodul der V2X Einheit und das Kommunikationsmodul des Steuergerätes jeweils einen WLAN Kommunikationschip umfassen.

Eine vorteilhafte Ausführungsform des erfindungsgemäßen Fahrzeugsystems zeichnet sich dadurch aus, dass der WLAN Kommunikationschip derart ausgebildet ist, dass dieser zur Realisierung mehrerer WLAN Standards bzw. IEEE 802.11 Standards ausgestaltet ist.

Eine vorteilhafte Ausführungsform des erfindungsgemäßen Fahrzeugsystems zeichnet sich dadurch aus, dass das Kommunikationsmodul der V2X Einheit und das Kommunikationsmodul des Steuergerätes jeweils einen Bluetooth Kommunikationschip umfassen.

Eine vorteilhafte Ausführungsform des erfindungsgemäßen Fahrzeugsystems zeichnet sich dadurch aus, dass die V2X Einheit einen flüchtigen oder nicht-flüchtigen Speicher zum Zwischenspeichern von Daten, insbesondere Softwaremodule und Software Updates, umfasst. Der Speicher kann als gesonderter Speicher oder auch als zusätzlicher Speicherplatz, der für herunterladbare Daten vorgesehen ist, ausgeführt sein. Der Speicher dient auf diese Weise als Pufferspeicher für den Fall, dass eine schnelle Bereitstellung der Daten an die Steuergeräte nicht möglich ist. Solche Umstände können durch unterschiedliche Übertragungsgeschwindigkeiten zu den einzelnen Steuergeräten auftreten oder auch dann, wenn Steuergeräte im Stillstand des Fahrzeugs ausgeschaltet werden.

Unter Softwareupdates können u. a. verstanden werden:
- Updates von Programmcode
- Updates von Parametern, beispielsweise für Fahrwerkseinstellungen, Motorsteuerung, Rufnummern für Herstellerdienste, etc.
- Updates für Daten, wie z. B. Kartendaten, Bilder fürs HMI, Töne fürs HMI, usw.
- neue Programme.

Die vorgenannte Definition ist nicht abschließend und gibt nur eine Liste vorteilhafter Beispiele wieder. Die Erfindung ist auch dahingehend zu verstehen, dass es sich auf eine Verwendung eines Speichers zum Zwischenspeichern von über die V2X Einheit bezogenen Daten, insbesondere heruntergeladenen Daten wie oben genannt, erstreckt.

Eine vorteilhafte Ausführungsform des erfindungsgemäßen Fahrzeugsystems zeichnet sich dadurch aus, dass der Speicher ein nichtflüchtiger Speicher, insbesondere ein Flash-Speicher, ist. Auf diese Weise bleiben zwischengespeicherte auch dann bestehen, wenn die Stromversorgung der V2X Einheit unterbrochen wird.

Eine vorteilhafte Ausführungsform des erfindungsgemäßen Fahrzeugsystems zeichnet sich dadurch aus, dass der Speicher ein flüchtiger Speicher, insbesondere ein RAM Baustein, ist. Der flüchtige Speicher kann bevorzugt alternativ oder zusätzlich zum vorgenannten Ausführungsbeispiel eines nicht-flüchtigen Speichers verwendet werden, wobei das Fahrzeugsystem in diesem Fall bevorzugt eine Stromversorgung der V2X Einheit oder des flüchtigen Speichers sicherstellt, um die Daten in dem Speicher zu halten. Insbesondere bei batteriebetriebenen Fahrzeugen, die einen größeren Stromspeicher als Fahrzeuge mit Verbrennungsmotoren aufweisen, könnte diese Ausführungsform weitere Vorteile bieten.

Eine vorteilhafte Ausführungsform des erfindungsgemäßen Fahrzeugsystems zeichnet sich dadurch aus, dass die V2X Einheit einen Stromspeicher zur Energieversorgung der V2X Einheit aufweist. Auf diese Weise könnte ein Notstromspeicher für die V2X realisiert werden.

Die Aufgabe wird ferner gelöst nach einem zweiten Aspekt der Erfindung mittels eines Verfahrens zum Betreiben eines Fahrzeugsystems enthaltend
eine V2X Einheit zum Betreiben einer Fahrzeug-zu-X Kommunikation, aufweisend ein Kommunikationsmodul zur drahtlosen Datenübertragung, und
einem Steuergerät zum Steuern einer Benutzeranwendung mit einem drahtlosen Kommunikationsmodul, das mit dem Kommunikationsmodul der V2X Einheit koppelbar ist, aufweisend die Schritte:
   - Erkennen einer vordefinierten Fahrsituation zum Aktivieren eines Datenübertragungsmodus in der V2X Einheit,
   - Aktivieren des Datenübertragungsmodus in der V2X Einheit,
   - Übermitteln eines Aktivierungssignals an das Steuergerät zum Aktivieren des Datenübertragungsmodus,
   - Koppeln der Kommunikationsmodule zur drahtlosen Datenübertragung der V2X Einheit und des Steuergerätes.

Erfindungsgemäß ist vorgesehen, dass das Aktivierungssignal über eine Schnittstelle, insbesondere CAN oder CAN FD, übermittelt wird.

Eine vorteilhafte Ausführungsform des erfindungsgemäßen Verfahrens zeichnet sich dadurch aus, dass der Datenübertragungsmodus aktiviert wird, sobald die Klemme 15 einen geöffneten Zustand einnimmt.

Eine vorteilhafte Ausführungsform des erfindungsgemäßen Verfahrens zeichnet sich dadurch aus, dass die Kommunikationsmodule der V2X Einheit und des Steuergerätes ein WLAN und / oder ein Bluetooth Kommunikationschip umfassen, und die V2X Einheit und das Steuergerät über WLAN und / oder Bluetooth miteinander gekoppelt werden.

Vorzugsweise umfasst das Verfahren ferner die Schritte:
- Erkennen einer vordefinierten Fahrsituation zum Deaktivieren des Datenübertragungsmodus,
- Entkoppeln der Verbindung zwischen den Kommunikationsmodulen mittels der V2X Einheit.

Die Aufgabe wird ferner gelöst nach einem dritten Aspekt der Erfindung mittels eines Verfahrens zum Speichern von Daten in einem Fahrzeugsystem enthaltend
eine V2X Einheit zum Betreiben einer Fahrzeug-zu-X Kommunikation mit einem Kommunikationsmodul zur drahtlosen Datenübertragung und einem Speicher zum Zwischenspeichern von Daten, insbesondere Softwaremodule und Software Updates, und
einem Steuergerät zum Steuern einer Benutzeranwendung mit einem Kommunikationsmodul zur drahtlosen Datenübertragung, das mit dem Kommunikationsmodul der V2X Einheit koppelbar ist, aufweisend die Schritte:
   - Erkennen einer vordefinierten Fahrsituation zum Aktivieren eines Datenübertragungsmodus in der V2X Einheit,
   - Aktivieren des Datenübertragungsmodus in der V2X Einheit und aktivieren des Kommunikationsmoduls zur Verbindung zu einem externen Netzwerk,
   - Suchen nach verfügbaren externen Netzwerken zum Aufbau einer Verbindung zu einem Server,
   - Verbinden mit dem Netzwerk, sofern ein Netzwerk verfügbar ist, oder beenden des Datenübertragungsmodus, wenn kein Netzwerk vorhanden ist,
   - Herunterladen der Daten von dem Server, und
   - Zwischenspeichern der Daten auf dem Speicher der V2X Einheit.

Eine vorteilhafte Ausführungsform des erfindungsgemäßen Verfahrens zeichnet sich dadurch aus, dass das Verfahren im abgeschalteten Zustand des Fahrzeugs ausgeführt wird, und wobei die V2X Einheit ausgeschaltet wird, wenn kein Netzwerk verfügbar ist.

Eine vorteilhafte Ausführungsform des erfindungsgemäßen Verfahrens zeichnet sich dadurch aus, dass die V2X Einheit abgeschaltet wird, wenn der Speicher voll ist oder alle vorgesehenen Daten zwischengespeichert sind.

Eine vorteilhafte Ausführungsform des erfindungsgemäßen Verfahrens zeichnet sich dadurch aus, dass die V2X Einheit nach dem Einschalten des Fahrzeugs prüft, ob der Speicher befüllt ist.

Erfindungsgemäß ist vorgesehen, dass die V2X Einheit die Daten an entsprechende Systeme, Steuergeräte, Sensoren oder Module des Fahrzeugs bereitstellt.

Eine vorteilhafte Ausführungsform des erfindungsgemäßen Verfahrens zeichnet sich dadurch aus, dass der Speicher geleert wird, wenn die Bereitstellung der Daten erfolgreich abgeschlossen wurde.

Erfindungsgemäß ist vorgesehen, dass die Bereitstellung der Daten über Fahrzeugschnittstelle, insbesondere CAN, CAN FD, Flexray oder einen Lowspeed-Bus, erfolgt.

Eine vorteilhafte Ausführungsform des erfindungsgemäßen Verfahrens zeichnet sich dadurch aus, dass die Bereitstellung der Daten nach einer Bestätigung durch einen Fahrer ausgeführt wird.

Eine vorteilhafte Ausführungsform des erfindungsgemäßen Verfahrens zeichnet sich dadurch aus, dass die Bereitstellung der Daten etappenweise erfolgt, wenn der Speicher zum Zwischenspeichern der Daten nicht ausreicht.

Eine vorteilhafte Ausführungsform des erfindungsgemäßen Verfahrens zeichnet sich dadurch aus, dass das Kommunikationsmodul der V2X Einheit zwei Antennen zum gleichzeitigen Betreiben der V2X Kommunikation und der Kopplung mit einem fahrzeuginternen Steuergerät aufweist, und wobei die Antennen nacheinander oder gleichzeitig verwendet werden, um die Daten aus dem Speicher bereitzustellen.

Die Erfindung wird nachfolgend anhand eines Ausführungsbeispiels und anhand von Figuren näher beschrieben. Es zeigen:
- Figur 1: eine schematische Darstellung der Architektur eines erfindungsgemäßen Fahrzeugsystems gemäß einem ersten Ausführungsbeispiel, und
- Figur 2: eine perspektivische Ansicht einer V2X Einheit gemäß dem ersten Ausführungsbeispiel.

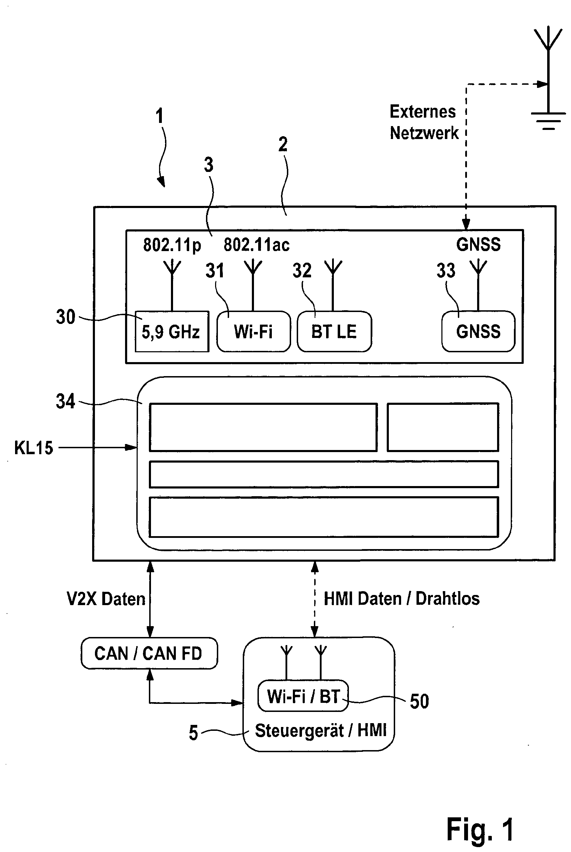

Figur 1 zeigt ein Fahrzeugsystem 1 enthaltend eine Einheit 2 zum Betreiben einer Fahrzeug-zu-X Kommunikation, kurz V2X bzw. V2X Einheit 2, mit einem drahtlosen Kommunikationsmodul 3. Ferner weist das Fahrzeugsystem 1 ein Steuergerät 5 zum Steuern einer Benutzeranwendung auf, das mit einem drahtlosen Kommunikationsmodul 50 ausgestattet ist und worüber das Steuergerät 5 mit dem Kommunikationsmodul 3 der V2X Einheit koppelbar ist. Die V2X Einheit 2 und das Steuergerät 5 sind derart ausgebildet, dass sie in einen Datenübertragungsmodus aktivierbar oder schaltbar sind, um die Kommunikationsmodule 3, 50 der V2X Einheit und des Steuergerätes für einen Datenaustausch miteinander zu koppeln. Der Datenübertragungsmodus ist gesondert von einem V2X Modus zu betrachten und dient in erster Linie dazu Nutzerdaten im Fahrzeug zu verteilen.

Das Kommunikationsmodul 3 ist vorteilhafterweise derart ausgebildet, dass der V2X Modus und der Datenübertragungsmodus gleichzeitig betreibbar sind, was aber nicht zwingend erforderlich ist. Hierzu weist das Kommunikationsmodul 3 mehrere Kommunikationschips 30, 31, 32 mit entsprechenden Antennen auf. Gleichzeitig ist die V2X Einheit 2 mit einer Verarbeitungseinheit 34 ausgestattet, die mehrere Kommunikationskanäle zum gleichzeitigen Senden und Empfangen von Daten aufweist.

Zum einen weist das Kommunikationsmodul 3 einen WLAN Kommunikationschip 30 mit einer Antenne (symbolisch mit 3 Funkzweigen abgebildet) auf, die gemäß dem IEEE 802.11p Standard arbeitet und zum Ausführen der V2X Kommunikation vorgesehen ist. Darüber hinaus ist ein zusätzlicher WLAN oder Wi-Fi Kommunikationschip 31 vorgesehen, der nach IEEE 802.11ac Standard arbeitet. Es wäre auch möglich eines der anderen WLAN nicht V2X spezifischen Standards zur Datenüberübertragung zu verwenden. Neben diesem WLAN Kommunikationschip 31 umfasst das Kommunikationsmodul 3 noch einen Bluetooth LE Kommunikationschip 32 mit einer entsprechenden Antenne. Üblicherweise weist das Kommunikationsmodul 3 noch einen GNSS Empfänger 33 zum Empfangen von Satellitendaten zur globalen Satellitennavigation auf.

Die V2X Einheit 2 ist mit dem Steuergerät 5 gekoppelt. In diesem Ausführungsbeispiel handelt es sich bei dem Steuergerät 5 um eine Infotainment und Fahrzeugbedieneinheit, die eine Eingabeschnittstelle für einen Benutzer und ein Display zum Anzeigen von Informationen aufweist, wie z. B. Verkehrswarnungen oder dgl. Das Steuergerät 5 ist zum einen über eine Schnittstelle, hier CAN oder CAN FD Schnittstelle, mit der V2X Einheit verbunden. Darüber hinaus weist das Steuergerät 2 ein eigenes Kommunikationsmodul 50 mit einem WLAN und Bluetooth Kommunikationschip 50 auf. Über diese ist das Steuergerät mit dem WLAN und Bluetooth Kommunikationschip 31, 32 der V2X Einheit 2 koppelbar, um im Datenübertragungsmodus Daten auszutauschen. Die Aktivierung des Datenübertragungsmodus erfolgt mittels eines Aktivierungssignals, was von der V2X Einheit generiert wird und vorzugsweise über die CAN Schnittstelle übermittelt wird.

Alternativ kann dieser Modus auch dann aktiviert bzw. deaktiviert werden, wenn sich eine Zustandsänderung der Klemme 15 KL15 ergibt. Hierzu ist die Verarbeitungseinheit 34 mit einem entsprechenden Signaleingang versehen. Gemäß dieser Alternative können dann nicht nur reine Nutzdaten, sondern auch Daten zur V2X Kommunikation bzw. V2X relevante Daten an das Steuergerät mittels der drahtlosen Kommunikationsmodule 31, 32 übertragen werden. Erfindungsgemäß wird das Fahrzeugsystem umfassend die V2X Einheit 2 und das Steuergerät 5 derart betrieben, dass zunächst die V2X Einheit 2 überprüft bzw. erkennt, ob eine vordefinierte Fahrsituation vorliegt, in der in den Datenübertragungsmodus geschaltet werden kann. Typischerweise handelt es sich um Situationen, in der das Fahrzeug sich nicht oder nur langsam bewegt bzw. nur eine geringe Fahraktivität vorliegt. Dies kann anhand der in der V2X Einheit 2 verarbeiteten Daten, Datenmenge oder bei Vorliegen von bestimmten Datentypen erkannt werden. Ferner kann, auch ein externes Signal dazu genutzt werden, um einen Fahrzeugzustand zu erkennen, wie z. B. das KL15 Signal.

Liegt eine entsprechende Fahrsituation vor und / oder gibt es einen Bedarf den Datenübertragungsmodus zu aktivieren, weil eine Datenanforderung seitens des Steuergerätes vorliegt, wird der Datenübertragungsmodus in der V2X Einheit 2 aktiviert. Dieser übermittelt ein Aktivierungssignal an das Steuergerät 5 zum aktivieren des Datenübertragungsmodus über die CAN Schnittstelle. Gleichzeitig oder kurz danach wird der interne WLAN- bzw. Bluetooth-Chip 31, 32 aktiviert, idealerweise im 2, 4 GHz-Bereich, so dass diese mit dem Kommunikationsmodul 50 des Steuergerätes 5 gekoppelt werden können. Die V2X Einheit 2 und das Steuergerät 5 können über WLAN und / oder Bluetooth miteinander gekoppelt werden.

Wird das Fahrzeug wieder bewegt bzw. tritt es in eine andere Fahrzeugsituation ein, so wird diese Änderung ebenfalls erkannt und der Datenübertragungsmodus deaktiviert sowie die Verbindung zwischen den Kommunikationsmodulen 3, 50 mittels der V2X Einheit beendet.

Das hier beschriebene Ausführungsbeispiel erlaubt es auch den Datenübertragungsmodus parallel zum V2X Modus zu betreiben. Damit ist es ebenfalls möglich, Daten per internem WLAN bzw. Bluetooth zu verteilen. Das bietet sich vor allem dann an, wenn beispielsweise die Daten auch an Smartphones im Fahrzeuginnenraum gesendet werden sollen. Das kann genutzt werden, um entsprechende Apps auf den Smartphones mit Daten zu versorgen, die beispielsweise für Augmented Reality Anwendungen nutzbar sind.

Mit dem beschriebenen Verfahren sind auch nachrüstbare V2X Einheiten realisierbar. Diese werden mit dem CAN-Bus verbunden, um die notwendigen Fahrzeugdaten zu bekommen. Dafür muss der CAN-Bus nicht geändert werden. Die Daten können dann an Einheiten im Fahrzeuginnenraum gesendet werden, beispielsweise an Smartphones oder Tablets oder auch fest verbaute Bildschirme, die jedoch nicht mit der V2X Einheit verkabelt werden müssen.

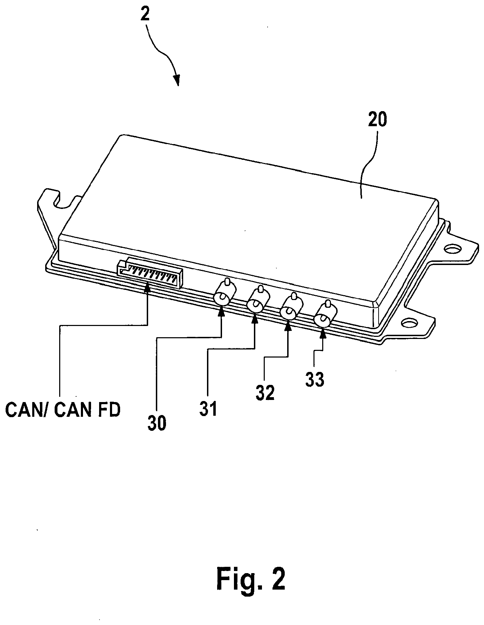

Im Folgenden sei ein weiteres Nutzungsszenario beschrieben. Die V2X Einheit 2 ist in einem Fahrzeug abgesetzt von einem Steuergerät 5 verbaut, da es sich in der Nähe der Antennen befindet. In Figur 2 ist die V2X Einheit 2 in einer perspektivischen Ansicht dargestellt.

Die V2X Einheit 2 umfasst ein Gehäuse 20, in der die Verarbeitungseinheit 34, die Kommunikationschips 30, 31, 32 und der GNSS Empfänger 33 auf einer Leiterplatine untergebracht sind. An der Außenseite des Gehäuses 20 befinden sich mehrere Anschlüsse, über die die Kommunikationschips 30, 31, 32 und der GNSS Empfänger 33 mit den Antennen verbindbar sind. Die Antennen befinden sich in der Regel auf dem Dach benachbart zur Heckscheibe des Fahrzeugs.

Das Steuergerät 5 in Form der Infotainment-ECU befindet sich hingegen in der Nähe der Mittelkonsole. Die Infotainment-ECU hat einen internen Bluetooth-Knoten, über den ein Handy mit dem Fahrzeug verbunden werden kann. Die V2X Einheit 2 wird daher auch mit einem Bluetooth-Knoten sowie einer internen Antenne ausgerüstet. Im V2X-Modus rechnet die V2X Einheit 2 die Endkundenanwendungen und sendet über CAN bzw. CAN-FD die V2X Daten, die sich aus den Endkundenanwendungen ergeben. Im Parkmodus schaltet die V2X Einheit 2 auf normales WLAN nach außen um und signalisiert dies gleichzeitig über CAN. Daraufhin schaltet die Infotainment-ECU in den internen Kommunikationsmodus bzw. Datenübertragungsmodus und verbindet sich mittels Bluetooth oder WLAN mit der V2X Einheit. Über diese Verbindung wird dann die externe WLAN-Kommunikation von der V2X Einheit an die Infotainment-ECU weitergereicht, beispielsweise um Musikalben an das Fahrzeug zu übertragen. Mittels Bluetooth 3.0 oder 4.0 sind dabei bis zu 24MBit/s möglich. Mit WLAN sind höhere Datenübertragungsraten realisierbar. Sobald das Fahrzeug den Parkmodus verlässt, signalisiert die V2X Einheit über CAN die Änderung des Kommunikationsmodus und beendet die Übertragung mittels internem Bluetooth oder WLAN.

Durch das erfindungsgemäße Fahrzeugsystem bzw. Verfahren werden die Kosten für die High-Speed-Bus Verkabelung gespart, inkl. Bus-Transceivern, EMV-Beschaltung, usw. Zusätzlich können weitere Synergien genutzt werden, beispielsweise bei schon vorhandenem internen WLAN bzw. Bluetooth in empfangenden Steuergeräten.

Nachfolgend wird eine Variante des vorgenannten Ausführungsbeispiels beschrieben. Gemäß dieser Variante weist die V2X Einheit 2 einen Speicher zum Zwischenspeichern von Daten auf. Diese werden dazu genutzt um Softwaremodule und Software Updates zwischenzuspeichern, die im Datenübertragungsmodus heruntergeladen werden. Bei den Speichern handelt es sich um nichtflüchtige Speicher, wie z. B. Flash-Speicher. Es ist jedoch auch denkbar flüchtige Speicher, wie RAM Bausteine zu verwenden. Auf diese Weise kann auf eine dezidierte Schnittstelle, wie z. B. Ethernet, verzichtet werden, um die Daten an die Steuergeräte zu übermitteln bzw. diesen bereitzustellen. Der Speicher kann beispielsweise in der Verarbeitungseinheit 34 untergebracht sein. Dabei kann es ein für die Daten dezidierter Speicher sein oder eine zusätzliche Partition auf einem Speicher der Verarbeitungseinheit 34.

Diese Variante des erfindungsgemäßen Ausführungsbeispiels kann in der allgemeinsten Form wie folgt betrieben werden:
- Erkennen einer vordefinierten Fahrsituation zum Aktivieren eines Datenübertragungsmodus in der V2X Einheit,
- Aktivieren des Datenübertragungsmodus in der V2X Einheit und aktivieren des Kommunikationsmoduls zur Verbindung zu einem externen Netzwerk,
- Suchen nach verfügbaren externen Netzwerken zum Aufbau einer Verbindung zu einem Server,
- Verbinden mit dem Netzwerk, sofern ein Netzwerk verfügbar ist, oder beenden des Datenübertragungsmodus wenn kein Netzwerk vorhanden ist,
- Herunterladen der Daten von dem Server, und
- Zwischenspeichern der Daten auf dem Speicher der V2X Einheit.

Nachfolgend werden weitere Details zu den einzelnen Schritten beschrieben. Demnach läuft ein Updatevorgang wie folgt ab:
- Das Fahrzeug wird nach einer Fahrt abgestellt und ggf. in den Parkmodus versetzt.
- Damit wird die V2X-ECU bzw. V2X Einheit 2 automatisch von V2X auf WLAN umgestellt.
- Alle weiteren Steuergeräte im Fahrzeug werden nach dem normalen Muster incl. Nachlauf ausgeschaltet, falls die Zündung deaktiviert wird.
- Kann sich die V2X-ECU in ein WLAN-Netz einwählen, verbindet sie sich mit dem Updateserver. Falls das nicht gelingt, schaltet sich die V2X-ECU mit evtl. notwendigem Nachlauf ab.
- Sind auf dem Updateserver Updates vorhanden, lädt die V2X-ECU diese in ihren Flash-Speicher. Anschließend (oder falls kein Update vorhanden ist) schaltet sich die V2X-ECU mit evtl. notwendigem Nachlauf ab.
- Wird das Fahrzeug erneut gestartet und damit auch die V2X-ECU aktiviert, prüft diese, ob im Flash-Speicher Updates vorhanden sind. Falls ja, werden diese über einen Lowspeed-Bus (CAN, CAN-FD, Flexray, ...) den entsprechenden Steuergeräten mitgeteilt.
- Befindet sich das Fahrzeug in einem Modus, das ein Einspielen der Updates ermöglicht, so fordern die betroffenen Steuergeräte die Updates von der V2X-ECU an und die V2X-ECU verteilt diese entsprechend über den Lowspeed-Bus. Dieser Modus kann beispielsweise nach dem Einschalten des Fahrzeugs sein, wo der Fahrer auf die anstehenden Updates hingewiesen wird und dieser die Updates bestätigt hat.
- Meldet das betroffene Steuergerät den erfolgreich abgeschlossenen Updatevorgang, werden die dafür benötigten Daten aus dem Flash-Speicher der V2X-ECU gelöscht.

Wird nicht so viel Wert auf Stromsparen gelegt, kann auch ein flüchtiger Speicher, wie beispielsweise ein RAM-Speicher, verwendet werden und nur eine Zwischenspeicherung stattfinden, um die Updates direkt per Lowspeed-Bus zu verteilen. Hierzu müssen jedoch die gesamte Zeit alle beteiligten Steuergeräte mit Energie versorgt bleiben.

Anstelle des Lowspeed-Busses kann für die Übertragung der für ein Update vorgesehenen Daten an ein Steuergerät alternativ oder ergänzend auch der Kommunikationschip der V2X-ECU verwendet werden. Dafür muss dieser in den WLAN-Modus versetzt werden und anstelle mit der externen Antenne mit einer internen Antenne verbunden werden, beispielsweise über einen HF-Switch. Das Steuergerät, welches die Daten empfängt, muss natürlich ebenfalls mit WLAN und einer zugehörigen internen Antenne ausgestattet sein. Diese interne WLAN-Kommunikation kann sowohl mit einem Flash-Speicher verwendet werden, also nachdem das Fahrzeug einmal aus- und wieder eingeschaltet wurde, aber auch mit dem flüchtigen Speicher. Bei der Verwendung des flüchtigen Speichers wird dieser mit über die externe Antenne empfangenen Daten gefüllt und dann während oder nach der Übertragung der darin gespeicherten Daten über die interne Antenne wieder geleert, anschließend, falls notwendig, wieder über die externe Antenne gefüllt, usw. Sollte die Größe des Zwischenpuffers nicht für das komplette Update ausreichen kann das hin- und herschalten des WLAN-Modus mehrfach durchgeführt werden, um das Update schrittweise zu transferieren.

Ist der V2X-Kommunikationschip mit Bluetooth ausgestattet, kann anstelle oder in Ergänzung von WLAN auch Bluetooth zur Übertragung an einer oder mehreren Stellen im beschriebenen Vorgang verwendet werden.

In einer Werkstatt können die Speicher umgangen werden und die Updates direkt eingespielt werden, da dort sowohl die Stromversorgung als auch die Verbindung mit dem Updateserver während des kompletten Updatevorgangs sichergestellt werden kann. Idealerweise erfolgt dieser Moduswechsel des Updatevorgangs entweder durch einen entsprechend gekennzeichneten Updateserver, beispielsweise mit entsprechenden Securityzertifikaten, oder indem eine entsprechende Botschaft über die WLAN-Kommunikation an die V2X-ECU gesendet wird.

Anstelle von dedizierten Flash- oder RAM-Bausteinen können auch in die ECU integrierte Flash- oder RAM-Bereiche verwendet werden, falls diese zum Zeitpunkt des Updates für keine anderen Aufgaben benötigt werden. Vor allem bei RAM bietet sich das an, da dieser je nach laufender Anwendung unterschiedlich stark ausgenutzt wird.

Allgemein sei darauf hingewiesen, dass unter Fahrzeug-zu-X-Kommunikation (Vehicle-to-X-Communication; V2X) insbesondere eine direkte Kommunikation zwischen Fahrzeugen und/oder zwischen Fahrzeugen und Infrastruktureinrichtungen verstanden wird. Beispielsweise kann es sich also um Fahrzeug-zu-Fahrzeug-Kommunikation oder um Fahrzeug-zu-Infrastruktur-Kommunikation handeln. Sofern im Rahmen dieser Anmeldung auf eine Kommunikation zwischen Fahrzeugen Bezug genommen wird, so kann diese grundsätzlich beispielsweise im Rahmen einer Fahrzeug-zu-Fahrzeug-Kommunikation erfolgen, welche typischerweise ohne Vermittlung durch ein Mobilfunknetz oder eine ähnliche externe Infrastruktur erfolgt und welche deshalb von anderen Lösungen, welche beispielsweise auf ein Mobilfunknetz aufbauen, abzugrenzen ist. Beispielsweise kann eine Fahrzeug-zu-X-Kommunikation unter Verwendung der Standards IEEE 802.11p oder IEEE 1609.4 erfolgen. Eine Fahrzeug-zu-X-Kommunikation kann auch als C2X-Kommunikation bezeichnet werden. Die Teilbereiche können als C2C (Car-to-Car) oder C2I (Car-to-Infrastructure) bezeichnet werden. Die Erfindung schließt jedoch Fahrzeug-zu-X-Kommunikation mit Vermittlung beispielsweise über ein Mobilfunknetz explizit nicht aus. Eine Fahrzeug-zu-Fahrzeug-Kommunikation kann beispielsweise auch über LTE erfolgen.

Die zur Anmeldung gehörigen Ansprüche stellen keinen Verzicht auf die Erzielung weitergehenden Schutzes dar.

Sofern sich im Laufe des Verfahrens herausstellt, dass ein Merkmal oder eine Gruppe von Merkmalen nicht zwingend nötig ist, so wird anmelderseitig bereits jetzt eine Formulierung zumindest eines unabhängigen Anspruchs angestrebt, welcher das Merkmal oder die Gruppe von Merkmalen nicht mehr aufweist. Hierbei kann es sich beispielsweise um eine Unterkombination eines am Anmeldetag vorliegenden Anspruchs oder um eine durch weitere Merkmale eingeschränkte Unterkombination eines am Anmeldetag vorliegenden Anspruchs handeln. Derartige neu zu formulierende Ansprüche oder Merkmalskombinationen sind als von der Offenbarung dieser Anmeldung mit abgedeckt zu verstehen.

Es sei ferner darauf hingewiesen, dass Ausgestaltungen, Merkmale und Varianten der Erfindung, welche in den verschiedenen Ausführungen oder Ausführungsbeispielen beschriebenen und/oder in den Figuren gezeigt sind, beliebig untereinander kombinierbar sind. Einzelne oder mehrere Merkmale sind beliebig gegeneinander austauschbar. Hieraus entstehende Merkmalskombinationen sind als von der Offenbarung dieser Anmeldung mit abgedeckt zu verstehen.

Rückbezüge in abhängigen Ansprüchen sind nicht als ein Verzicht auf die Erzielung eines selbständigen, gegenständlichen Schutzes für die Merkmale der rückbezogenen Unteransprüche zu verstehen. Diese Merkmale können auch beliebig mit anderen Merkmalen kombiniert werden.

Merkmale, die lediglich in der Beschreibung offenbart sind oder Merkmale, welche in der Beschreibung oder in einem Anspruch nur in Verbindung mit anderen Merkmalen offenbart sind, können grundsätzlich von eigenständiger erfindungswesentlicher Bedeutung sein. Sie können deshalb auch einzeln zur Abgrenzung vom Stand der Technik in Ansprüche aufgenommen werden.

## Patentansprüche

1. Fahrzeugsystem (1) umfassend
- eine V2X Einheit (2) zum Betreiben einer Fahrzeug-zu-X Kommunikation, aufweisend ein Kommunikationsmodul (3) zur drahtlosen Datenübertragung, und
- ein Steuergerät (5) zum Ausführen einer Benutzeranwendung, aufweisend ein Kommunikationsmodul (50) zur drahtlosen Datenübertragung, das mit dem Kommunikationsmodul (3) der V2X Einheit (2) koppelbar ist,
wobei die V2X Einheit (2) und das Steuergerät (5) in einen Datenübertragungsmodus aktivierbar sind, um die Kommunikationsmodule (3, 50) zur drahtlosen Datenübertragung der V2X Einheit (2) und des Steuergerätes (5) für einen Datenaustausch miteinander zu koppeln, wobei die V2X Einheit (2) und das Steuergerät (5) mittels einer Schnittstelle gekoppelt sind, wobei der Datenübertragungsmodus mittels eines Aktivierungssignals der V2X Einheit (2) über die Schnittstelle aktivierbar ist.

2. Fahrzeugsystem nach Anspruch 1, wobei die Schnittstelle eine CAN oder CAN FD Schnittstelle ist.

3. Fahrzeugsystem nach Anspruch 1 oder 2, wobei der Datenübertragungsmodus in Abhängigkeit vom Zustand der Klemme 15 aktivierbar ist.

4. Fahrzeugsystem nach Anspruch 3, wobei im abgeschalteten Zustand der Klemme 15 Daten zur V2X Kommunikation über das Steuergerät (5) mittels der Kommunikationsmodule übertragbar sind.

5. Fahrzeugsystem nach einem der vorstehenden Ansprüche, wobei das Kommunikationsmodul (3) der V2X Einheit (2) zum gleichzeitigen Betreiben der V2X Kommunikation und der Kopplung mit dem Steuergerät (5) ausgebildet ist.

6. Fahrzeugsystem nach einem der vorstehenden Ansprüche, wobei die V2X Einheit (2) mehrere Kommunikationskanäle zum gleichzeitigen Senden und Empfangen von Daten aufweist.

7. Fahrzeugsystem nach einem der vorstehenden Ansprüche, wobei das Kommunikationsmodul (3) der V2X Einheit (2) und das Kommunikationsmodul (50) des Steuergerätes (5) jeweils einen WLAN Kommunikationschip (31) umfassen.

8. Fahrzeugsystem nach dem vorstehenden Anspruch, wobei der WLAN Kommunikationschip (31) derart ausgebildet ist, dass dieser zur Realsierung mehrerer WLAN Standards ausgestaltet ist.

9. Fahrzeugsystem nach einem der vorstehenden Ansprüche, wobei das Kommunikationsmodul (3) der V2X Einheit (3) und das Kommunikationsmodul (50) des Steuergerätes (5) jeweils einen Bluetooth Kommunikationschip (32) umfassen.

10. Fahrzeugsystem nach einem der vorstehenden Ansprüche, wobei die V2X Einheit (2) einen flüchtigen oder nicht-flüchtigen Speicher zum Zwischenspeichern von Daten umfasst.

11. Fahrzeugsystem nach einem der vorstehenden Ansprüche, wobei die V2X Einheit (2) einen Stromspeicher zur Energieversorgung der V2X Einheit (2) aufweist.

12. Verfahren zum Betreiben eines Fahrzeugsystems enthaltend eine V2X Einheit (2) zum Betreiben einer Fahrzeug-zu-X Kommunikation, aufweisend ein Kommunikationsmodul (3) zur drahtlosen Datenübertragung, und
einem Steuergerät (5) zum Ausführen einer Benutzeranwendung, aufweisend ein Kommunikationsmodul (50) zur drahtlosen Datenübertragung, das mit dem Kommunikationsmodul (3) der V2X Einheit (2) koppelbar ist,
aufweisend die Schritte:
- Erkennen einer vordefinierten Fahrsituation zum aktivieren eines Datenübertragungsmodus in der V2X Einheit (2),
- Aktivieren des Datenübertragungsmodus in der V2X Einheit (2),
- Übermitteln eines Aktivierungssignals an das Steuergerät (5) zum Aktivieren des Datenübertragungsmodus,
- Koppeln der Kommunikationsmodule (3,50) zur drahtlosen Datenübertragung der V2X Einheit (2) und des Steuergerätes (5)
wobei das Aktivierungssignal über eine Schnittstelle übermittelt wird.

13. Verfahren nach Anspruch 12, wobei die Schnittstelleeine CAN oder CAN FD Schnittstelle ist.

14. Verfahren nach Anspruch 12 oder 13, wobei der Datenübertragungsmodus aktiviert wird, sobald die Klemme 15 einen geöffneten Zustand einnimmt.

15. Verfahren nach einem der Ansprüche 12 bis 14, wobei die Kommunikationsmodule der V2X Einheit (2) und des Steuergerätes (5) ein WLAN und / oder ein Bluetooth Kommunikationschip umfassen, und die V2X Einheit und das Steuergerät über WLAN und / oder Bluetooth miteinander gekoppelt werden.

16. Verfahren nach einem der Ansprüche 12 bis 15, ferner umfassend die Schritte:
- Erkennen einer vordefinierten Fahrsituation zum Deaktivieren des Datenübertragungsmodus,
- Entkoppeln der Verbindung zwischen den Kommunikationsmodulen (3, 50) mittels der V2X Einheit (2).

17. Verfahren zum Speichern von Daten in einem Fahrzeugsystem enthaltend
eine V2X Einheit zum Betreiben einer Fahrzeug-zu-X Kommunikation mit einem Kommunikationsmodul zur drahtlosen Datenübertragung und einem Speicher zum Zwischenspeichern Daten, insbesondere Softwaremodule und Software Updates, und
einem Steuergerät zum Steuern einer Benutzeranwendung mit einem Kommunikationsmodul zur drahtlosen Datenübertragung, das mit dem Kommunikationsmodul der V2X Einheit koppelbar ist,
aufweisend die Schritte:
- Erkennen einer vordefinierten Fahrsituation zum aktivieren eines Datenübertragungsmodus in der V2X Einheit,
- Aktivieren des Datenübertragungsmodus in der V2X Einheit ,
wobei
• ein Aktivierungssignal an das Steuergerät zum Aktivieren des Datenübertragungsmodus übermittelt wird, und
• die Kommunikationsmodule zur drahtlosen Datenübertragung der V2X Einheit und des Steuergerätes gekoppelt werden, wobei das Aktivierungssignal über eine Schnittstelle übermittelt wird, und
- Aktivieren des Kommunikationsmoduls zur Verbindung zu einem externen Netzwerk,
- Suchen nach verfügbaren externen Netzwerken zum Aufbau einer Verbindung zu einem Server,
- Verbinden mit dem Netzwerk, sofern ein Netzwerk verfügbar ist, oder beenden des Datenübertragungsmodus wenn kein Netzwerk vorhanden ist,
- Herunterladen der Daten von dem Server, und
- Zwischenspeichern der Daten auf dem Speicher der V2X Einheit wobei die V2X Einheit die Daten an entsprechende Systeme, Steuergeräte, Sensoren oder Module des Fahrzeugs bereitstellt, wobei die Bereitstellung der Daten über die Kommunikationsmodule zur drahtlosen Datenübertragung der V2X Einheit und des Steuergerätes erfolgt.

18. Verfahren nach Anspruch 17, wobei das Verfahren im abgeschalteten Zustand des Fahrzeugs ausgeführt wird, und wobei die V2X Einheit ausgeschaltet wird, wenn kein Netzwerk verfügbar ist.

19. Verfahren nach einem der Ansprüche 17 oder 18, wobei die V2X Einheit abgeschaltet wird, wenn der Speicher voll ist oder alle vorgesehenen Daten zwischengespeichert sind.

20. Verfahren nach einem der Ansprüche 17 bis 19, wobei die V2X Einheit nach dem Einschalten des Fahrzeugs prüft, ob der Speicher befüllt ist.

21. Verfahren nach einem der Ansprüche 17 bis 20, wobei der Speicher geleert wird, wenn die Bereitstellung der Daten erfolgreich abgeschlossen wurde.

22. Verfahren nach einem der Ansprüche 17 bis 21, wobei die Fahrzeugschnittstelleeine CAN, CAN FD, Flexray oder Lowspeed-Bus Schnittstelle ist.

23. Verfahren nach einem der Ansprüche 17 bis 22, wobei die Bereitstellung der Daten über ein WLAN Kommunikationschip oder ein Bluetooth Kommunikationschip des Kommunikationsmoduls der V2X Einheit erfolgt.

24. Verfahren nach einem der Ansprüche 17 bis 23, wobei die Bereitstellung der Daten nach einer Bestätigung durch einen Fahrer ausgeführt wird.

25. Verfahren nach einem der Ansprüche 17 bis 24, wobei die Bereitstellung der Daten etappenweise erfolgt, wenn der Speicher zum Zwischenspeichern der Daten nicht ausreicht.

26. Verfahren nach dem vorstehenden Anspruch, wobei das Kommunikationsmodul der V2X Einheit zwei Antennen zum gleichzeitigen Betreiben der V2X Kommunikation und der Kopplung mit einem fahrzeuginternen Steuergerät aufweist, und wobei die Antennen nacheinander oder gleichzeitig verwendet werden, um die Daten aus dem Speicher bereitzustellen.

## Claims

1. A vehicle system (1) comprising
- a V2X unit (2) for operating a vehicle-to-X communication, having a communications module (3) for wireless data transfer, and
- a control device (5) for executing a user application, having a communications module (50) for wireless data transfer, which can be coupled with the communications module (3) of the V2X unit (2),
wherein the V2X unit (2) and the control device (5) can be activated in a data transfer mode in order to couple the communications modules (3, 50) for wireless data transfer of the V2X unit (2) and of the control device (5) with each other for a data exchange, wherein the V2X unit (2) and the control device (5) are coupled by means of an interface, wherein the data transfer mode can be activated by means of an activation signal of the V2X unit (2) via the interface.

2. The vehicle system according to Claim 1, wherein the interface is a CAN or CAN FD interface.

3. The vehicle system according to Claim 1 or 2, wherein the data transfer mode can be activated as a function of the state of the terminal 15.

4. The vehicle system according to Claim 3, wherein in the off state of the terminal 15 data for the V2X communication can be transferred via the control device (5) by means of the communications modules.

5. The vehicle system according to any one of the preceding claims, wherein the communications module (3) of the V2X unit (2) is configured for simultaneous operation of the V2X communication and coupling with the control device (5).

6. The vehicle system according to any one of the preceding claims, wherein the V2X unit (2) has a plurality of communications channels for simultaneous sending and receiving of data.

7. The vehicle system according to any one of the preceding claims, wherein the communications module (3) of the V2X unit (2) and the communications module (50) of the control device (5) each comprise a WLAN communications chip (31).

8. The vehicle system according to the preceding claim, wherein the WLAN communications chip (31) is configured such that it is designed to implement a plurality of WLAN standards.

9. The vehicle system according to any one of the preceding claims, wherein the communications module (3) of the V2X unit (3) and the communications module (50) of the control device (5) each comprise a Bluetooth communications chip (32).

10. The vehicle system according to any one of the preceding claims, wherein the V2X unit (2) comprises a volatile or non-volatile memory for intermediate storage of data.

11. The vehicle system according to any one of the preceding claims, wherein the V2X unit (2) has a storage battery for supplying the V2X unit (2) with energy.

12. A method for operating a vehicle system containing a V2X unit (2) for operating a vehicle-to-X communication, having a communications module (3) for wireless data transfer, and
- a control device (5) for executing a user application, having a communications module (50) for wireless data transfer, which can be coupled with the communications module (3) of the V2X unit (2),
having the steps of:
- identifying a predefined driving situation for activation of a data transfer mode in the V2X unit (2),
- activating the data transfer mode in the V2X unit (2),
- transmitting an activation signal to the control device (5) for activating the data transfer mode,
- coupling the communications modules (3, 50) for wireless data transfer of the V2X unit (2) and of the control device (5),
wherein the activation signal is transmitted via an interface.

13. The method according to Claim 12, wherein the interface is a CAN or CAN FD interface.

14. The method according to Claim 12 or 13, wherein the data transfer mode is activated as soon as the terminal 15 adopts an open state.

15. The method according to any one of Claims 12 to 14, wherein the communications modules of the V2X unit (2) and of the control device (5) comprise a WLAN and/or a Bluetooth communications chip, and the V2X unit and the control device are coupled with each other via WLAN and/or Bluetooth.

16. The method according to any one of Claims 12 to 15, further comprising the steps of:
- identifying a predefined driving situation for deactivating the data transfer mode,
- decoupling the connection between the communications modules (3, 50) by means of the V2X unit (2).

17. A method for storing data in a vehicle system containing
a V2X unit for operating a vehicle-to-X communication with a communications module for wireless data transfer and a memory for intermediate storage of data, in particular software modules and software updates, and
a control device for controlling a user application with a communications module for wireless data transfer, which can be coupled with the communications module of the V2X unit,
having the steps of:
- identifying a predefined driving situation for activating a data transfer mode in the V2X unit,
- activating the data transfer mode in the V2X unit,
wherein
the activation signal is transmitted to the control device for activating the data transfer mode, and
the communications modules for wireless data transfer of the V2X unit and of the control device are coupled, wherein the activation signal is transmitted via an interface, and
- activating the communications module for the connection to an external network,
- searching for available external networks for establishing a connection to a server,
- connecting with the network, inasmuch as a network is available, or terminating the data transfer mode, if no network is available,
- downloading the data from the server, and
- intermediate storage of the data in the memory of the V2X unit, wherein the V2X unit makes the data available to corresponding systems, control devices, sensors or modules of the vehicle, wherein the making available of the data takes place via the communications modules for wireless data transfer of the V2X unit and of the control device.

18. The method according to Claim 17, wherein the method is executed in the off state of the vehicle, and wherein the V2X unit is switched off if no network is available.

19. The method according to any one of Claims 17 or 18, wherein the V2X unit is switched off if the memory is full or all envisaged data have been intermediately stored.

20. The method according to any one of Claims 17 to 19, wherein the V2X unit, after the vehicle is switched on, checks if the memory is full.

21. The method according to any one of Claims 17 to 20, wherein the memory is cleared once the making available of the data has been successfully completed.

22. The method according to any one of Claims 17 to 21, wherein the vehicle interface is a CAN, CAN FD, Flexray or low speed bus interface.

23. The method according to any one of Claims 17 to 22, wherein the making available of the data takes place via a WLAN communications chip or a Bluetooth communications chip of the communications module of the V2X unit.

24. The method according to any one of Claims 17 to 23, wherein the making available of the data is executed following a confirmation by a driver.

25. The method according to any one of Claims 17 to 24, wherein the making available of the data takes place in stages if there is insufficient memory for intermediate storage of the data.

26. The method according to the preceding claim, wherein the communications module of the V2X unit has two antennas for simultaneous operation of the V2X communication and coupling with a control device internal to the vehicle, and wherein the antennas are used one after the other or simultaneously, in order to make available the data from the memory.

## Revendications

1. Système de véhicule (1) comprenant
- une unité V2X (2) pour l'exploitation d'une communication de véhicule à X, présentant un module de communication (3) pour le transfert de données sans fil, et
- un appareil de commande (5) pour l'exécution d'une application utilisateur, présentant un module de communication (50) pour le transfert de données sans fil, lequel peut être couplé avec le module de communication (3) de l'unité V2X (2),
l'unité V2X (2) et l'appareil de commande (5) étant activables pour passer dans un mode de transfert de données afin de coupler l'un avec l'autre les modules de communication (3, 50) pour le transfert de données sans fil de l'unité V2X (2) et de l'appareil de commande (5) pour un échange de données, l'unité V2X (2) et l'appareil de commande (5) étant couplés au moyen d'une interface, le mode de transfert de données étant activable au moyen d'un signal d'activation de l'unité V2X (2) par le biais de l'interface.

2. Système de véhicule selon la revendication 1, l'interface étant une interface CAN ou CAN FD.

3. Système de véhicule selon la revendication 1 ou 2, le mode de transfert de données étant activable en fonction de l'état de la borne 15.

4. Système de véhicule selon la revendication 3, des données pour la communication V2X pouvant être transférées par l'appareil de commande (5) au moyen du module de communication, avec état déconnecté de la borne 15.

5. Système de véhicule selon l'une quelconque des revendications précédentes, le module de communication (3) de l'unité V2X (2) étant formé pour l'exploitation simultanée de la communication V2X et du couplage avec l'appareil de commande (5).

6. Système de véhicule selon l'une quelconque des revendications précédentes, l'unité V2X (2) présentant plusieurs canaux de communication pour l'émission et la réception simultanées de données.

7. Système de véhicule selon l'une quelconque des revendications précédentes, le module de communication (3) de l'unité V2X (2) et le module de communication (50) de l'appareil de commande (5) comprenant respectivement une puce de communication WLAN (31).

8. Système de véhicule selon l'une quelconque des revendications précédentes, la puce de communication WLAN (31) étant formée de telle sorte que ladite puce est conçue pour la réalisation de plusieurs normes WLAN.

9. Système de véhicule selon l'une quelconque des revendications précédentes, le module de communication (3) de l'unité V2X (3) et le module de communication (50) de l'appareil de commande (5) comprenant respectivement une puce de communication Bluetooth (32).

10. Système de véhicule selon l'une quelconque des revendications précédentes, l'unité V2X (2) comprenant une mémoire volatile ou non volatile pour l'enregistrement temporaire de données.

11. Système de véhicule selon l'une quelconque des revendications précédentes, l'unité V2X (2) présentant un accumulateur d'électricité pour l'alimentation en énergie de l'unité V2X (2).

12. Procédé pour l'exploitation d'un système de véhicule comprenant une unité V2X (2) pour l'exploitation d'une communication de véhicule à X, présentant un module de communication (3) pour le transfert de données sans fil, et
- un appareil de commande (5) pour l'exécution d'une application utilisateur, présentant un module de communication (50) pour le transfert de données sans fil, lequel peut être couplé avec le module de communication (3) de l'unité V2X (2),
présentant les étapes :
- identification d'une situation de conduite prédéfinie pour l'activation d'un mode de transfert de données dans l'unité V2X (2),
- activation du mode de transfert de données dans l'unité V2X (2),
- transmission d'un signal d'activation à l'appareil de commande (5) pour l'activation du mode de transfert de données,
- couplage des modules de communication (3, 50) pour le transfert de données sans fil de l'unité V2X (2) et de l'appareil de commande (5),
le signal d'activation étant transmis par une interface.

13. Procédé selon la revendication 12, l'interface étant une interface CAN ou CAN FD.

14. Procédé selon la revendication 12 ou 13, le mode de transfert de données étant activé dès que la borne 15 prend un état ouvert.

15. Procédé selon l'une des revendications 12 à 14, les modules de communication de l'unité V2X (2) et de l'appareil de commande (5) comprenant une puce de communication WLAN et/ou Bluetooth, et l'unité V2X et l'appareil de commande étant couplés l'un avec l'autre par WLAN et/ou par Bluetooth.

16. Procédé selon l'une des revendications 12 à 15, comprenant en outre les étapes :
- identification d'une situation de conduite prédéfinie pour la désactivation du mode de transfert de données,
- découplage de la connexion entre les modules de communication (3, 50) au moyen de l'unité V2X (2).

17. Procédé pour l'enregistrement de données dans un système de véhicule, comprenant une unité V2X pour l'exploitation d'une communication de véhicule à X avec un module de communication pour le transfert de données sans fil et avec une mémoire pour l'enregistrement temporaire de données, en particulier des modules logiciels et des mises à jour de logiciels, et
un appareil de commande pour la commande d'une application utilisateur avec un module de communication pour le transfert de données sans fil, lequel peut être couplé avec le module de communication de l'unité V2X,
présentant les étapes :
- identification d'une situation de conduite prédéfinie pour l'activation d'un mode de transfert de données dans l'unité V2X,
- activation du mode de transfert de données dans l'unité V2X
• un signal d'activation étant transmis à l'appareil de commande pour l'activation du mode de transfert de données, et
• les modules de communication pour le transfert de données sans fil de l'unité V2X et de l'appareil de commande étant couplés, le signal d'activation étant transmis par le biais d'une interface, et
- activation du module de communication pour la connexion à un réseau externe,
- recherche de réseaux externes disponibles pour l'établissement d'une connexion à un serveur,
- connexion au réseau, si un réseau est disponible, ou arrêt du mode de transfert de données lorsque aucun réseau n'est disponible,
- téléchargement des données du serveur, et
- enregistrement temporaire des données dans la mémoire de l'unité V2X, l'unité V2X fournissant les données à des systèmes, appareils de commande, capteurs ou modules du véhicule correspondants, la fourniture des données étant effectuée par les modules de communication pour le transfert de données sans fil de l'unité V2X et de l'appareil de commande.

18. Procédé selon la revendication 17, le procédé étant exécuté dans l'état arrêté du véhicule, et l'unité V2X étant désactivée lorsque aucun réseau n'est disponible.

19. Procédé selon l'une des revendications 17 ou 18, l'unité V2X étant désactivée lorsque la mémoire est pleine ou lorsque toutes les données prévues ont été enregistrées temporairement.

20. Procédé selon l'une des revendications 17 à 19, l'unité V2X contrôlant, après le démarrage du véhicule, si la mémoire est pleine.

21. Procédé selon l'une des revendications 17 à 20, la mémoire étant vidée lorsque la fourniture des données a été effectuée correctement.

22. Procédé selon l'une des revendications 17 à 21, l'interface du véhicule étant une interface de bus CAN, CAN FD, Flexray ou low speed.

23. Procédé selon l'une des revendications 17 à 22, la fourniture des données étant effectuée par une puce de communication WLAN et/ou par une puce de communication Bluetooth du module de communication de l'unité V2X.

24. Procédé selon l'une des revendications 17 à 23, la fourniture des données étant effectuée après une confirmation par un conducteur.

25. Procédé selon l'une des revendications 17 à 24, la fourniture des données étant effectuée par étapes, lorsque la mémoire pour l'enregistrement temporaire des données ne suffit pas.

26. Procédé selon l'une quelconque des revendications précédentes, le module de communication de l'unité V2X présentant deux antennes pour l'exploitation simultanée de la communication V2X et du couplage avec un appareil de commande interne au véhicule, et les antennes étant utilisées l'une après l'autre ou simultanément afin de fournir les données de la mémoire.
